# EUROPÄISCHE PATENTSCHRIFT

(11) **EP 3 900 083 B1**
(45) Veröffentlichungstag und Bekanntmachung des Hinweises auf die Patenterteilung: **19.04.2023**
(21) Anmeldenummer: 19832358.6
(22) Anmeldetag: 19.12.2019
(51) Int. Cl.: H01M 4/36, H01M 4/56, H01M 10/06, H01M 4/20, C01G 21/10

(54) **BESCHICHTETES PULVRIGES BLEIOXID, EIN VERFAHREN ZU DESSEN HERSTELLUNG UND VERWENDUNGEN**
COATED POWDERY LEAD OXIDE, METHOD FOR PRODUCTION THEREOF, AND USES
OXYDE DE PLOMB POUDREUX ENROBÉ, SON PROCÉDÉ DE FABRICATION ET SES UTILISATIONS

(30) Priorität: 19.12.2018 DE 102018132898
(43) Veröffentlichungstag der Anmeldung: 27.10.2021
(73) Patentinhaber: Penox GmbH, 99885 Ohrdruf (DE)
(72) Erfinder: KIRCHGESSNER, Micha, 99089 Erfurt (DE); BUSSAR, Rainer, 99885 Ohrdruf (DE); KLEIN, Ian, 38867 Bad Harzburg (DE)
(74) Vertreter: Held, Stephan
(86) Internationale Anmeldenummer: PCT/EP2019/086290
(87) Internationale Veröffentlichungsnummer: WO 2020/127720

(56) Entgegenhaltungen:
- WO-A1-01/26170
- RU-C2- 2 256 258
- US-A- 2 803 532

## Beschreibung

Die Erfindung betrifft ein beschichtetes pulvriges Bleioxid, insbesondere in Form von Bleimennige und/oder Batterieoxid, sowie ein Verfahren zur Herstellung desselben sowie dessen Verwendung zur Herstellung aktiver Pasten für Bleiakkumulatoren.

Die Erfindung geht von dem folgenden nächstliegenden Stand der Technik aus:
Zurzeit sind ausschließlich Verfahren zur Vermischung von pulverförmigen Bleioxid- und Bleisulfatkomponenten bekannt. Diese Verfahren beruhen auf der Verwendung von mehr oder weniger geeigneten Mischaggregaten, die zu weitestgehend homogenen Mischungen führen sollen. Allen diesen Verfahren ist gemein, dass bei der Vermischung von sehr geringen Anteilen (< 1 Gew.-%) einer Komponente innerhalb der Gesamtmischung diese nach dem Mischprozess meist nicht homogen verteilt ist. Dies hat zur Folge, dass die erwarteten Vorteile für die Zyklenfähigkeit, die Formationsdauer und -energie sowie die Lebensdauer des Bleiakkumulators bei der Verwendung solcher Mischungen nur teilweise und mit großen Streuungen erhalten werden.

Ein weiterer technischer Ansatz geht von einem zweistufigen Mischverfahren aus, bei dem die pulverförmigen Bleioxid- und Bleisulfatkomponenten zunächst im ersten Schritt zu einem sogenannten Masterbatch mit einem höheren Bleisulfatanteil von ca. 10 Gew.-% vermischt werden und dieser Masterbatch in einem zweiten Mischungsschritt zum endgültigen Produkt durch Zugabe des entsprechenden Anteils der Bleioxidkomponente "verdünnt" wird. Das in dieser Weise erhaltene Produkt weist eine verbesserte Homogenität auf, die weitestgehend den Ansprüchen der vorstehend beschriebenen Verwendung entspricht. Der höhere Energieeinsatz, bedingt durch das zweimalige Mischen sowie die erhöhten Staubemissionen durch den erhöhten Handlingsaufwand, ist bei diesem Verfahren ein gewisser Nachteil.

Ein genereller Nachteil der zuvor benannten Verfahren ist das Herstellen eines Gemenges, welches sich während des Transports und der Handhabung wieder entmischen kann. Dies wird insbesondere durch die Unterschiede in den Partikelgrößen und der spezifischen Dichte forciert.

Zudem ist auf folgenden Stand der Technik hinzuweisen: Die US 2 803 532 A beschreibt ein Verfahren zum Beschichten von Bleioxidpartikeln mit Bleisulfid (Anspruch 1). Die Beschichtung findet mechanisch und in trockenem Zustand statt. Als Ausgangsstoff wird Sintermaterial verwendet. Zum Beschichten wird eine Kugelmühle verwendet, so dass die Temperatur der Mischung durch Energieeintrag erhöht wird. Beschichtetes pulveriges Bleioxid gemäß der nachfolgend geschilderten Erfindung, aufweisend ein anhaftendes 4-baisches Bleisulfat einer mittleren Teilchengröße von weniger als 3 µm, wird nicht offenbart. Die in der US 2 803 532 A beschriebenen Partikel haben einen Durchmesser von 5 bis 30 mm und sind zur Herstellung aktiver Pasten für Akkumulatoren im hier angesprochenen technischen Bereich nicht geeignet. Aus der RU 2 256 258 C2 (Bezugnahme auf die Maschinenübersetzung) ist es bekannt, zur Herstellung von Aktivmaterialpasten eine Mischung von Bleioxid, Bleisulfat und Silikat heranzuziehen (§§ [0002], [0012], [0013], [0015] und [0023] sowie Ansprüche 1-3 und 5). Die RU 2 256 258 C2 spezifiziert nicht, wie eine Mischung oder fertige Paste hergestellt werden soll. Schließlich zeigt die WO 01/26170 A, wie Mischungen in Gegenwart von Wasser aus Bleioxid und Schwefelsäure hergestellt werden. Das nachfolgend beschriebene erfindungsgemäße Verfahren, das bei weitgehendem Ausschluss von Wasser betrieben wird, ist nicht angesprochen.

Die Erfindung hat sich die Aufgabe gestellt, ein modifiziertes Bleioxid zur Verfügung zu stellen, das bei seiner Weiterverarbeitung im Pastenmischprozess zu einer Aktivmasse führt, welche in der weiteren Verarbeitung im Plattenprozess eine möglichst geringe Formationsdauer und -energie ermöglicht. Weiterhin führt es zu einer längeren Lebensdauer der Bleiakkumulatoren und zu einer verbesserten Zyklenfestigkeit.

Die Erfindung löst die obige Aufgabe durch ein beschichtetes pulvriges Bleioxid, insbesondere in Form von Bleimennige und/oder von Batterieoxid, das dadurch gekennzeichnet ist, dass auf der Oberfläche des beschichteten pulvrigen Bleioxids 4-basisches Bleisulfat einer mittleren Teilchengröße von weniger als etwa 3 µm haftet und der Wassergehalt des beschichteten pulvrigen Bleioxids unter 3,5 Gew.-%, insbesondere unter 3,0 Gew.-%, liegt.

Die Erfindung stellt sich gleichsam in Form eines Kern-Schale-Prinzips eines beschichteten pulvrigen Bleioxids dar, wobei das Bleioxid den Kern und die Beschichtung die Schale darstellt. Diese muss zudem nicht vollständig ausgebildet sein. Dennoch sollten die nachfolgend dargestellten vorteilhaften diesbezüglichen Ausbildungen bedacht werden, d.h. die jeweiligen quantitativen Rahmenbedingungen.

Das erfindungsgemäß herangezogene zu beschichtende pulvrige Bleioxid ist grundsätzlich nicht beschränkt. Es kann sich um ein im Rahmen des vorliegenden technischen Bereichs übliches Bleioxid handeln. Dieses liegt insbesondere in Form von Bleimennige und/oder von Batterieoxid vor. Wenn hier von Batterieoxid gesprochen wird, dann handelt es sich insbesondere um das fachmännisch geläufige "Bartonoxid" und "Mühlenoxid", wobei das Bartonoxid gegenüber dem Mühlenoxid bevorzugt wird. Der Grund hierfür liegt darin, dass ein typisches Bartonoxid einen deutlich höheren Anteil an orthorhombischem Bleioxid hat, was sich positiv auf die Zyklenfestigkeit der positiven Aktivmasse auswirkt. Weiterhin ist das Bartonoxid weniger feinteilig als ein Mühlenoxid und weist typisch eine Teilchenverteilung d50 von 3 µm bis 6 µm bzw. einen mittleren Teilchendurchmesser von 4 µm bis 15 µm, insbesondere von 12 µm bis 15 µm, auf. Dadurch wird ein Verlust von Aktivmasse während des Nassfüllprozesses von Röhrchentaschen durch Ausschlammen der feinteiligen Anteile der Oxide in der Paste deutlich reduziert.

Beim Einsatz von Batterieoxid in Form von Bartonoxid hat dieses vorzugsweise einen Bleianteil von 15 Gew.-% bis 35 Gew.-%, insbesondere von 20 Gew.-% bis 25 Gew.-%.

Beim Einsatz von Bleimennige hat diese vorzugsweise einen PbO2 Gehalt von 20 Gew.-% bis 33 Gew.-%, insbesondere von 25 Gew.-% bis 30 Gew.-% und einen mittleren Teilchendurchmesser von 2 µm bis 10 µm, insbesondere von 3 µm bis 8 µm.

Das erfindungsgemäße beschichtete pulvrige Bleioxid kann vielfältige vorteilhafte Ausgestaltungen, wie folgt, erfahren:
So ist es bevorzugt, dass der Wassergehalt des beschichteten pulvrigen Bleioxids 1 Gew.-% bis 2 Gew.-%, insbesondere 1,3 Gew.-% bis 1,8 Gew.-%, beträgt. Ferner ist es bevorzugt, wenn die mittlere Teilchengröße des 4-basischen Bleisulfats kleiner als 1,5 µm ist und insbesondere zwischen etwa 0,2 µm und 0,9 µm liegt. Das beschichtete pulvrige Bleioxid hat vorzugsweise eine mittlere Teilchengröße von etwa 1 µm bis 8 µm, insbesondere von etwa 3 µm bis 6 µm.

Das erfindungsgemäße Bleioxid zeichnet sich durch verschiedene vorteilhafte Eigenschaften aus, auf die nachfolgend eingegangen wird: So ist es von Vorteil, wenn die Rieselfähigkeit/Fließfähigkeit, gemessen als Schüttwinkel nach DIN ISO 4324/Dezember 1983 von 38° bis 43°, insbesondere von 39° bis 42°, aufweist. Die Einhaltung dieser Grenzwerte bedeutet, dass die beschichtete Mennige vergleichbar oder besser rieselfähig und schüttbar ist als eine unmodifizierte Mennige gleichen Typs und gleicher Feuchte. (In den Vergleichsversuchen liegt der Schüttwinkel der unmodifizierten Mennige etwa 2° bis zu 4° höher.)

Von besonderem Vorteil ist es, wenn sich unter Anwendung eines Stampfvolumeters bei dem beschichteten pulvrigen Bleioxid ein Wert der Stampfdichte von 3,2 g/ml bis 3,4 g/ml bei Verwendung von 2000 Hüben ergibt. Bei Einhaltung dieser Rahmenbedingungen der Stampfdichte zeigt sich folgender Vorteil durch die Einhaltung von vorgegebenen Wertebereichen für die Stampfdichte, die einer Trockenfüllung von Röhrchenplatten im besonderen Maße zuträglich sind.

Zweckmäßig ist es, wenn das beschichtete pulvrige Bleioxid eine Schüttdichte von 1,5 g/ml bis 2,2 g/ml, insbesondere 1,7 g/ml bis 1,9 g/ml, aufweist. Diese Schüttdichte führt zu dem Vorteil, dass das Material in vergleichbarer Weise dosiert und gehandhabt werden kann wie die im industriellen Bereich umfangreich eingesetzte Mennige. Insbesondere hat der Kunde hierdurch keinen weiteren Investitionsaufwand im Bereich der Produkthandhabung.

Das erfindungsgemäße Bleioxid zeichnet sich dadurch aus, dass es eine Stabilität aufweist, wonach sich beim Transport und/oder Rütteln in trockenen gefüllten Röhrchenplatten keine Entmischung einstellt.

Kieselsäure wird vorteilhaft als begleitende Beschichtungssubstanz herangezogen: Es ist demzufolge bevorzugt, dass auf der Oberfläche des beschichteten pulvrigen Bleioxids zusätzlich zum 4-basischen Bleisulfat feinteilige Kieselsäure einer mittleren Teilchengröße von etwa 10 nm bis 120 nm, insbesondere von etwa 20 nm bis 80 nm, vorliegt. Hierbei ist es vorteilhaft, dass die feinteilige Kieselsäure hydrophob und/oder hydrophil, insbesondere pyrogen ist. Im Zusammenhang mit der Kieselsäure ist noch auf folgende quantitativ vorteilhafte Ausbildung zu verweisen: So ist es zweckmäßig, dass die Menge der feinteiligen Kieselsäure, bezogen auf das Gesamtgewicht aus 4-basischem Bleisulfat und feinteiliger Kieselsäure, etwa 0,01 Gew.-% bis 10 Gew.-%, insbesondere etwa 0,02 Gew.-% bis 5 Gew.-%, besonders bevorzugt etwa 0,05 Gew.-% bis 5 Gew.-%, beträgt.

Gegenstand der vorliegenden Erfindung ist auch ein Verfahren zur Herstellung eines erfindungsgemäßen beschichteten pulvrigen Bleioxids, wie oben dargestellt. Dieses Verfahren ist dadurch gekennzeichnet, dass pulvrige Bleimennige und/oder pulvriges Batterieoxid, insbesondere Bartonoxid, sowie eine wässrige Suspension einer hierfür vorgesehenen Beschichtungsmasse, die auf einer wässrigen Suspension von 4-basischem Bleisulfat und optional feinteiliger Kieselsäure beruht, unter Einwirkung hoher Scherkräfte innig gemischt werden, was zu einer Temperaturerhöhung führt, wobei die erhöhte Temperatur bis zu etwa 80°C, vorzugsweise bis zu etwa 90°C und insbesondere bis zu etwa 100°C beträgt, und während des Mischens der Wasseranteil im anfallenden beschichteten pulvrigen Bleioxid durch Durchströmen mit warmer Luft, insbesondere einer Temperatur von 40 bis 90°C, auf weniger als 3,5 Gew.-%, insbesondere weniger als 3 Gew.-%, eingestellt wird. Das Anlegen von Vakuum, anschließend oder auch allein, ist besonders vorteilhaft. Hierbei ist es bevorzugt, dass das angelegte Vakuum etwa 400 mbar bis 900 mbar, insbesondere etwa 600 mbar bis 700 mbar, beträgt.

Zwar ist es besonders vorteilhaft, bei der Durchführung des erfindungsgemäßen Verfahrens feinteilige Kieselsäure in der Suspension neben dem 4-basischen Bleisulfat einzusetzen, worauf nachfolgend noch eingegangen wird. Jedoch kann der Einsatz von feinteiliger Kieselsäure neben 4-basischem Bleisulfat in der Suspension in Einzelfällen ausgelassen werden, was jedoch in der Regel nicht vorteilhaft ist.

Hierbei handelt es sich durch den Einbezug von feinteiliger Kieselsäure um ein besonders vorteilhaftes Verfahren, das einen Beitrag zur Homogenität des Verfahrenserzeugnisses liefert und darüber hinaus noch die angesprochene Suspension in wünschenswerter Weise stabilisiert. So werden nachteilige Agglomerationen der suspendierten Teilchen vermieden. Wenngleich Kieselsäure bei dem erfindungsgemäßen Verfahren besonders vorteilhaft ist, ist nicht auszuschließen, dass andere Stabilisierungsmittel entsprechend gleichermaßen vorteilhafte Wirkungen zeigen.

Das erfindungsgemäße Verfahren kann vielfältig vorteilhaft ausgestaltet werden, um ein optimales Verfahrenserzeugnis herzustellen:
So ist es von Vorteil, dass der angesprochene Wassergehalt des erhaltenen beschichteten pulvrigen Bleioxids 1 Gew.-% bis 2 Gew.-%, insbesondere 1,3 Gew.-% bis 1,8 Gew.-%, beträgt. Auch ist es zweckmäßig, wenn bei der Temperaturerhöhung eine Temperatur von mindestens etwa 60°C, insbesondere etwa 70°C, überschritten wird.

Es ist des Weiteren bevorzugt, dass auf 100 Gewichtsteile pulvrige Bleimennige und/oder pulvriges Batterieoxid etwa 2 bis 20 Gewichtsteile, insbesondere etwa 5 bis 10 Gewichtsteile, Beschichtungsmasse basischen Bleisulfats und feinteiliger Kieselsäure, insbesondere abgeschieden aus einer wässerigen Suspension, entfallen.

Die bezeichnete wässrige Suspension, die zum Beschichten herangezogen wird, enthält etwa 20 Gew.-% bis 60 Gew.-%, insbesondere 40 Gew.-% bis 50 Gew.-% der Beschichtungsmasse. Darüber hinaus gilt es als vorteilhaft, dass die Beschichtungsmasse, die auf 4-basischem Bleisulfat und feinteiliger Kieselsäure beruht, etwa 0,01 Gew.-% bis 10 Gew.-%, insbesondere etwa 0,02 Gew.-% bis 5 Gew.-%, Kieselsäure enthält.

Aufmerksamkeit sollte im Hinblick auf eine Optimierung auch der mittleren Teilchengröße der oben angesprochenen wesentlichen Substanzen zugewandt werden. Danach ist es bevorzugt, dass die pulvrige Bleimennige eine mittlere Teilchengröße von 2 µm bis 10 µm, insbesondere von 3 µm bis 8 µm, das pulvrige Batterieoxid eine mittlere Teilchengröße von 4 µm bis 15 µm, insbesondere von 5 µm bis 10 µm, das 4-basische Bleisulfat eine mittlere Teilchengröße von weniger als 3 µm, vorzugsweise weniger als 1,5 µm und insbesondere zwischen etwa 0,2 µm und 0,9 µm, und/oder die feinteilige Kieselsäure eine mittlere Teilchengröße von 10 nm bis 120 nm, insbesondere von 20 nm bis 80 nm, aufweist. In Einzelfällen hat es sich erwiesen, dass es bevorzugt ist, wenn die pulvrige Bleimennige eine mittlere Teilchengröße von 8 bis 15 µm, insbesondere von 10 bis 13 µm, und/oder das pulvrige Batterieoxid eine mittlere Teilchengröße von 6 bis 15 µm, insbesondere von 8 bis 12 µm, aufweist.

Wie oben gezeigt, wirken bei der Durchführung des erfindungsgemäßen Verfahrens Scherkräfte. Dabei ist es vorteilhaft, wenn der Energieeintrag durch Scherkräfte von etwa 350 kJ bis 480 kJ, vorzugsweise von 400 kJ bis 430 kJ, insbesondere von 410 kJ bis 420 kJ, pro kg Substrat, beträgt.

Der besondere Wert der Erfindung zeigt sich insbesondere bei der Verwendung des erfindungsgemäßen beschichteten pulvrigen Bleioxids. Gegenstand der Erfindung ist daher auch dessen Verwendung zur Herstellung positiver aktiver Pasten für Bleiakkumulatoren auf der Grundlage des auf Bleimennige beruhenden beschichteten pulvrigen Bleioxids sowie zur Herstellung positiver sowie negativer aktiver Pasten für Bleiakkumulatoren auf der Grundlage des auf Batterieoxid, insbesondere Bartonoxid, beruhenden beschichteten pulvrigen Bleioxids. Hierbei ist es besonders bevorzugt, wenn das beschichtete pulvrige Bleioxid sowohl im Rahmen einer Nass- als auch einer Trockenfüllung von Röhrchentaschen von Bleiakkumulatoren eingesetzt wird.

Wie oben angesprochen, führt die vorliegende Erfindung zu vielfältigen Vorteilen. Der vorteilhafte Einbezug von Kieselsäure führt zu einer wünschenswerten Stabilisierung der eingesetzten wässrigen Suspension mit dem Hauptbestandteil des 4-basischen Bleisulfats, vorzugsweise in den bezeichneten Mengen und Größen und Teilchendurchmesserbereichen. Das erfindungsgemäße Verfahren ist ein besonders vorteilhafter Weg, in einer einfach geführten Weise das angestrebte Verfahrenserzeugnis mit seinen besonderen Eigenschaften zu erhalten, insbesondere ein homogenes Erzeugnis mit wünschenswerter Rieselfähigkeit und günstigen Werten für die Stampfdichte zu erzielen.

Wenn auf den gemeinsamen Einsatz von 4-basischem Bleisulfat und feinteiliger Kieselsäure abgezielt wird, zeigen sich weitere vorteilhafte Eigenschaften. Hier soll die Kombination 4-basisches Bleisulfat (4BS)/feinteilige Kieselsäure mit TBLS+ bezeichnet werden (TBLS+: EP 1 576 679 B1: Additiv zur Herstellung der positiven aktiven Masse für Bleiakkumulatoren - ein Verfahren zu dessen Herstellung und dessen Verwendung). Die EP 2 577 778 B1 betrifft ein Additiv zur Herstellung von positiven aktiven Massen für Bleiakkumulatoren, das zusätzlich Bleimennige einbezieht.

Das erfindungsgemäße beschichtete pulvrige Bleioxid, insbesondere in Form von Bleimennige und/oder von Batterieoxid, kombiniert die Eigenschaften von Bleimennige mit TBLS+, ist jedoch im Unterschied zu dem Material, welches in der EP 2 577 778 B1, beschrieben wird, aufgrund seiner geänderten Partikelgröße in positiven Aktivmassen vorteilhafter zu verwenden. Das in der EP 2 577 778 B1 beschriebene Produkt weist im Gegensatz zu dem erfindungsgemäßen beschichteten Bleioxid eine Partikelgröße < 1 µm auf, die zu einer geringeren Porengröße bei der positiven Aktivmasse nach der Reifung und somit zu geringeren Kapazitätswerten für die Bleibatterie führen kann. Im Unterschied zum TBLS+, welches in der Anwendung vorzugsweise eine Suspension ist, ist das erfindungsgemäße Produkt ein pulverförmiger Stoff. Das erfindungsgemäße beschichtete pulvrige Bleioxid ist nicht frostempfindlich (anders als TBLS+) und kann vom Kunden ohne weiteren apparativen Aufwand in den üblichen Batteriepasten-Mischprozessen eingesetzt werden. Der Mischaufwand beim Kunden ist bei geringen 4-basischen Anteilen im Aktivmassegemisch reduziert, da das erfindungsgemäße Produkt bereits auf seiner Oberfläche mit der geeigneten Menge des 4-basischen Bleisulfats (dem Keimbildner) beladen ist. Die anzuwendende Additivmenge in dem erfindungsgemäßen beschichteten pulvrigen Bleioxid beträgt etwa 0,1 bis 5 Gew.-%, insbesondere etwa 0,25 Gew.-% bis 1 Gew.-%. REM-Untersuchungen von daraus hergestellten Platten zeigen eine optimierte 4-basische Bleisulfat-Struktur und eine im Vergleich zu Standardmischungen ohne den Keimbildner porösere Aktivmasse. - Letzteres wirkt sich positiv auf die Anfangskapazität aus.

Die Erfindung soll nachfolgend anhand verschiedener Beispiele, auch von Vergleichsbeispielen, noch näher erläutert werden:
Beispiel 1: Kurze Beschreibung des Herstellungsprozesses im Labormaßstab

Das Mischen erfolgte in einem Eirich R01 Mischer mit einem Mischvolumen von 5 Litern unter Verwendung eines Stiftwirblers und mit verschiedenen mechanischen Energieträgern. Es hat sich als sinnvoll erwiesen, auf die vorgelegte Bleimennige bei etwa 500 bis 1000 U/Min. die TBLS+ Suspension langsam hinzuzufügen und nach vollendeter Zugabe, bei 3000 bis 4000 U/Min., durch hohen mechanischen Energieeintrag intensiv zu mischen. Die Temperatur stieg während des Mischvorgangs rasch auf >50 °C an und bei Temperaturen über 60 °C kann unter Anlegen eines Vakuums von etwa 600 bis 700 mbar das Wasser bis auf etwa 3 % Restfeuchte kontinuierlich entzogen werden.

Es konnte so pro Mischung bis zu 5 kg modifizierter Bleimennige mit bis zu 10 Gew.-% 4-basischem Bleisulfat geträgert auf der Oberfläche der Bleimennige hergestellt werden. Mit diesem Material wurden erste positive Pasten hergestellt und es konnte gezeigt werden, dass bei der Reifung der Platten bei 85 °C und hoher Feuchte (>98 % RH) eine tetrabasische Struktur der Aktivmasse gebildet wird.

### Beispiel 2: Hochskalierung auf 50 Liter-Mischer - Masterbatch-Herstellung

Für industrielle Versuchsmaßstäbe wurde der Mischvorgang auf einen Industriemischer Typ Lödige FM-50 übertragen. Hierbei standen als Rührwerke die Pflugschar- und ein Messerkopfmischer zur Verfügung. In mehreren Versuchen wurde die Herstellung einer modifizierten Mennige mit bis zu 10 Gew.-% 4BS untersucht (im weiteren "Masterbatch" genannt), wobei die Zugabe des TBLS+ optimiert wurde.

Beschrieben wird die Herstellung eines Masterbatches mit 4,4 Gew.-% tetrabasischem Bleisulfat (4BS). Der Herstellungsprozess gliederte sich in vier Schritte: i) Zugabe des TBLS+ (wässrige Suspension), ii) innige Vermischung der Materialien, iii) Durchmischen der Materialien bei höherer Temperatur und beginnendem Wasserverlust und iv) Trocknung zu einem pulverigen Endprodukt.

Es wurden 40 kg Mennige vorgelegt und etwa 5 Minuten durchgemischt. Hierzu wurden 4,95 kg TBLS+ (Suspension) mit einem Feststoffanteil von 4-basischem Bleisulfat von 42 Gew.-% zu dosiert. Hierbei hat es sich als sinnvoll erwiesen, die Zugabe des TBLS+ unter diesen technischen Voraussetzungen auf etwa 1 kg pro Zugabeschritt zu begrenzen und die etwa 40 kg vorgelegte Mennige nach jeder Teil-Zugabe der TBLS+-Suspension etwa 5 bis 10 Minuten zu mischen. Während der Zugabe des TBLS+-Suspension wurden Proben gezogen, um die Homogenität der Mischung anhand der Feuchte und des 4-basischen Bleisulfat-Gehaltes zu prüfen.

Nach beendeter Zugabe der TBLS+-Suspension stieg die Temperatur im zweiten Schritt, der innigen Durchmischung, bei kontinuierlichem mechanischen Energieeintrag von etwa 420 kJ pro kg Gemisch, der Pflugscharmischer arbeitete bei etwa 100 Umdrehungen pro Minute, rasch auf 50 °C an und stieg im Weiteren bis auf 80 °C an. Der hohe mechanische Energieeintrag sorgte für eine sehr innige Durchmischung der Materialien und ein rasches Abtrocknen des Wasserfilms auf der Mennige, so dass das 4-basische Bleisulfat an der Oberfläche der Mennige dauerhaft anhaftet - es handelt sich insbesondere nicht um ein Gemenge von Mennigepulver und 4-basischem Bleisulfat, sondern um eine durch 4-basisches Bleisulfat beschichtete Mennige.

Es wurden verschiedene Methoden der Trocknung untersucht und es hat sich als besonders geeignet erwiesen, im dritten Schritt der Herstellung den Wasseranteil zunächst bei Temperaturen von bis zu 90 °C bei Normaldruck und unter stetigem Rühren durch ein staubdichtes Filtertuch an die Umgebung abzugeben. Dabei erfolgte bereits eine Trocknung auf etwa 6 Gew.-% Feuchte und die weitere Trocknung konnte dann im vierten Schritt über einen trockenen Luftstrom im oberen Mischerinnenraum oder über ein Vakuum oder eine Kombination aus beidem erfolgen. Durch ein Vakuum von etwa 600 mbar wurde die beschichtete Mennige final getrocknet und aus den vorgelegten Materialien in diesem Beispiel wurden 42,09 kg eines feinen Pulvers mit 4,4 Gew.-% Anteil 4-basischem Bleisulfat (4BS) erhalten. Der Wassergehalt wurde auf diese Weise auf 2,5 Gew.-% eingestellt.

Unter den vorliegenden technischen Voraussetzungen können mit dieser Methode in etwa 1,5 Stunden bis zu etwa 50 kg beschichtete Mennige mit hohem 4-basischen-Anteil (4BS) hergestellt werden. Es wurden Masterbatches mit etwa 4 Gew.-% 4BS, 7 Gew.-% 4BS und 9 Gew.- % 4BS erfolgreich hergestellt. - Im Detail beschrieben wurde im obigen Beispiel die Herstellung von 42 kg beschichteter Mennige mit 4,4 Gew.-% 4BS Anteil.

### Beispiel 3: Hochskalierung auf 300 kg Mischer - Herstellung von RL+ mit kundenspezifischem 4BS-Gehalt aus einem Masterbatch

Es wurde ein einfacher, jedoch effizienter "Blending"-Prozess entwickelt, der es erlaubt, aus dem Masterbatch mit hohem 4BS-Gehalt eine Mennige mit vom Kunden vordefiniertem 4BS-Gehalt herzustellen. Dazu wurden der pulverige Masterbatch und eine geeignete pulverige Mennige, ausgesucht nach Kundenspezifikation, in einem 300 kg-Pflugscharmischer vermischt. Die Details werden anhand der folgenden Ausführungen erläutert.

Zur Herstellung einer dotierten Mennige mit 1 Gew.-% 4BS-Anteil aus einem Masterbatch mit 4,4 Gew.-% 4BS-Anteil wurden 120 kg normale Mennige vorgelegt und 40 kg des Masterbatches hinzugefügt. Es wurde etwa 15 Minuten bei 18 Umdrehungen pro Minute im Gegenuhrzeigersinn vermischt, um das Material möglichst gut zu durchmischen und den Mischprozess der beiden Komponenten zu optimieren. Es wird ein spezifisch eingestelltes Produkt mit einem 4BS-Anteil von 1 Gew.-% +/- 0,1 Gew.-% erhalten, hierbei wurden insgesamt 12 Proben aus dem verdünnten Endprodukt (RL+) analysiert.

### Beispiel 4: Ergebnisse der physikalischen und chemischen Charakterisierung vom RL+

1. Es wurden rasterelektronenmikroskopische Aufnahmen (REM) des RL+ (4BS-Anteil 8 Gew.-%) durchgeführt. Das RL+ war pulverförmig und in den REM-Aufnahmen zeigte sich keine bedeutende Veränderung der Mennige-Partikel (dem Trägermaterial) aufgrund des Herstellungsprozesses. Insbesondere wurde mit Laserbeugung überprüft, dass der mittlere Teilchendurchmesser der Mennige nicht verändert wurde, was negative Auswirkungen auf die Funktion der Mennige als strukturgebenden Teil der Aktivmasse hätte.
2. Es wurden Bilder der energiedispersiven Röntgenspektrometrie (EDX) einer Probe RL+, dotiert mit 4,4 Gew.-% 4-basischem Bleisulfat, aufgenommen. Von dieser Probe wurde ein "Elementmapping" durchgeführt, um die Anteile von 4-basischem Bleisulfat (dem Keimbildner) auf der Oberfläche der Bleimennige (Bleimennige ist hierbei ein spezielles Bleioxid, das als Trägermaterial untersucht wurde) zu bestimmen. Beim Elementmapping kann nur der Anteil an Schwefel (S) zur Bewertung der Keimbildnerverteilung auf der Oberfläche der Mennige herangezogen werden, da die weiteren Komponenten im 4-basischen Bleisulfat das Blei (Pb) und der Sauerstoff (O) sind. Diese finden sich ebenfalls in dem Trägermaterial in Form der Bleimennige (Pb₃O₄) wieder.

Zusammenfassend kann zu den Ergebnissen der EDX-Analytik Folgendes festgestellt werden: Der Schwefel (S) vom 4-basischen Bleisulfat konnte mittels EDX-Technik nachgewiesen werden. Das Schwefel-Signal war auf dem untersuchten Abschnitt nahezu gleichmäßig verteilt. Kleine Punkte weisen auf das Vorhandensein von 4-basischen Keimbildnern auf der Oberfläche der Bleimennige hin. Dies ist ein eindeutiger Beleg für die Dotierung der Oberfläche der Bleimennige (Trägermaterial) mit 4-basischem Bleisulfat.

Nur wenige Bereiche wiesen verminderte Schwefel-Signale auf. Insgesamt konnte eine zufriedenstellende Verteilung des 4-basischen Bleisulfats beobachtet werden, die einen hohen spezifischen 4-basischen Effekt für die gereiften Batterieplatten erwarten lässt.

Das 4-basische Bleisulfat ist auf der Oberfläche des Trägermaterials Bleimennige fixiert und befindet sich nicht in den teilweise vorhandenen Poren der Bleimennige.

### Beispiel 5: Ergebnisse der gereiften Batterieplatten unter Verwendung des erfindungsgemäßen beschichteten Bleioxids (RL+)

Die Funktionalität des erfindungsgemäßen beschichteten Bleioxids RL+ wurde anhand von gereiften positiven Batterieplatten, die mit unterschiedlichen Anteilen RL+ unter Beibehaltung aller anderen Rezepturkomponenten hergestellt wurden, überprüft. Es wurden mehrere Versuchsansätze gefahren, um die Reproduzierbarkeit des Versuchsergebnisses und damit der Funktionalität von RL+ nachzuweisen.

Vermessen wurde mit folgender Charakteristik:
1. 0 Gew.-% TBLS+ (Referenz) (große Kristalle bis zu 50 µm)
2. 0,5 Gew.-% TBLS+ (Kristalle bis zu 20 µm)
3. 1 Gew.-% TBLS+ (Kristalle: 10-15 µm)
4. 1,5 Gew.-% TBLS+ (Kristalle < 10 µm)
5. 15 Gew.-% RL+ (entspricht 0,5 Gew.-% 4-basischem Bleisulfat)

Alle gereiften Platten enthielten 30 Gew.-% Bleimennige (Zusammensetzung: 15 Gew.-% Standard-Bleimennige und 15 Gew.-% RL+ mit 1 % 4-basischem Bleisulfat als Keimbildner). Die Kristallgrößen in der gereiften Aktivmasse entsprachen den Kristallgrößen in einer gereiften Aktivmasse mit 1 Gew.-% TBLS+.

Rasterelektronenmikroskopische Aufnahmen (REM-Aufnahmen) und Messungen der Porosität belegen, dass die Verwendung von RL+ reproduzierbare Ergebnisse für die Struktur der gereiften positiven Batterieplatten liefert.

Mittels Hg-Porosimetrie wurden die Porosität und die Porengrößenverteilung der gereiften positiven Platten untersucht. Hierbei wurde eine Porosität von 49 bis 51 % gefunden. Der mittlere Durchmesser der Poren lag deutlich über 1 µm. Die Ergebnisse belegen die Wirkung von RL+, die Porosität der positiven Aktivmasse zu erhöhen und hierbei eine homogene Porenverteilung zu erzeugen.

### Beispiel 6: Untersuchung der Wirkung unterschiedlicher 4-basischer Keimbildner im Vergleich zum erfindungsgemäßen Produkt

In einer Versuchsreihe wurden mit dem erfindungsgemäßen Produkt RL+, unter Beibehaltung aller anderen Rezepturbestandteile, Testreihen durchgeführt und die gereiften positiven Batterieplatten anschließend mit positiven Referenzplatten verglichen: Die gereiften Platten mit RL+ wurden gegen gereifte Platten mit TBLS+ und als zweite Referenz gegen ein pulverförmiges 4-basisches Bleisulfat (Keimbildnerzusatz) verglichen. In allen Fällen wurde der Anteil an 4-basischem Bleisulfat mit 0,5 % festgelegt.

Kennzeichnung von drei durchgeführten Versuchen:
1. (Variante 1) RL+ 0,5 % 4-basischer Keimbildner (4BS), Hg-Porosimetrie 51,7 %,
2. (Variante 2) TBLS+ äquivalent zu 0,5 % 4-basischem Keimbildner (4BS), Hg-Porosimetrie 51,7 % und
3. (Variante 3) 0,5 % 4-basischer pulverförmiger Keimbildner (4BS), Hg-Porosimetrie 47,6 %.

In REM-Aufnahmen wurden die drei Keimbildner-Zusätze in ihrem Effekt auf die Struktur der gereiften Aktivmasse beispielhaft untersucht. Hierbei wurde die Reifung identisch für alle drei Varianten durchgeführt. In den REM-Aufnahmen der gereiften Aktivmassen zeigte sich eine typische 4-basisch gereifte Aktivmassestruktur. Die Größe der 4-basischen Kristalle war vergleichbar den Kristallen in den mit TBLS+ hergestellten Aktivmassen (Variante 2). Die Aktivmassen, die mit dem pulverförmigen Keimbildner (Variante 3) hergestellt wurden, zeigen deutlich größere Kristalle in der Struktur der gereiften Aktivmasse.

Wünschenswert ist eine geringere mittlere Größe der 4-basischen Kristalle in der gereiften Aktivmasse bei gleicher Dosierung des 4-basischen Keimbildners. Hierbei kann mit geringerem Einsatz des Additivs die Wirkung erzielt werden - die spezifische Wirkung des Additivs ist höher. Das erfindungsgemäße Produkt RL+ in Variante 1 zeigte diese Wirkung in besonderer Weise.

Weiterhin zeigte RL+ einen positiven Effekt auf die Porosität der gereiften Aktivmasse: Es wurden bei einer Dosierung von 0,5 Gew.-% 4-basischem Bleisulfat hohe Porositätswerte von 52 % mit einer ebenfalls hohen Intrusion des Quecksilbers (Hg) gemessen. Die Ergebnisse der Proben mit TBLS+ (Variante 2) als Keimbildner waren dem erfindungsgemäßen Produkt RL+ in Bezug auf Porosität und Porengrößenverteilung der gereiften Aktivmasse ähnlich. Die Aktivmassen, die mit dem pulverförmigen Keimbildner (Variante 3) hergestellt wurden, zeigten die geringste Porosität und die geringste Intrusion des Quecksilbers. Hier ist das erfindungsgemäße beschichtete pulverförmige Bleioxid deutlich überlegen.

Wünschenswert ist eine homogene Porenstruktur. RL+ zeigte am Beispiel der Dosierung von 0,5 Gew.-% 4-basischen Bleisulfats (4BS) eine Porosität von 49 bis über 51 % in der gereiften Aktivmasse. Die Porenstruktur lag in dem Bereich von 1 bis 2 µm und zeigte eine homogene und enge Verteilung der Porendurchmesser. Die Homogenität der Porenstruktur ist hierbei dem pulverförmigen Keimbildner (Variante 3) klar überlegen.

### Zusammenfassung der mit den gereiften Batterieplatten erzielten Ergebnisse:

Bei der Herstellung von gereiften positiven Batterieplatten lieferten RL+ (Variante 1) und der reine 4-basische Keimbildner TBLS+ als Suspension (Variante 2) bei gleicher Einsatzmenge nahezu identische Kristallstrukturen und Kristallgrößen. Der pulverförmige Keimbildner (Variante 3) fällt hier mit deutlich größeren und für die Blei-Säure-Batterie nachteiligen Kristallen zurück.

Vergleichende Untersuchungen der Wirkungsweise von RL+ (Variante 1), 4-basischem Keimbildner TBLS+ (Variante 2) und dem pulverförmigen 4-basischen Keimbildner (Variante 3) belegen, dass der pulverförmige Keimbildner (Variante 3) deutlich geringere Hg-Intrusion sowie Porositätswerte in der gereiften positiven Batterieplatte bewirkt, wie es für das erfindungsgemäße Produkt RL+ (Variante 1) und den 4-basischen Keimbildner TBLS+ (Variante 2) gemessen wurde.

RL+ lieferte eine gute Reproduzierbarkeit seiner keimbildenden Eigenschaften, so dass die erfindungsgemäße Aufgabenstellung der Herstellung einer mit einem 4-basischen Keimbildner dotierten Bleimennige, die die Kristallgröße von gereiften positiven Platten steuern kann, vollumfänglich erfüllt wurde.

### Beispiel 7: Ergebnisse der Blei-Säure-Batterietests unter Verwendung des erfindungsgemäßen Produktes RL+

Die positiven Platten, die mit RL+ (Variante 1) hergestellt wurden, wurden in sogenannten Einzelplattentests, bestehend aus einer positiven und zwei negativen Batterieplatten, auf ihre elektrischen Eigenschaften getestet. Zum Vergleich wurden Batterieplatten, die den TBLS+-Keimbildner (Variante 2), sowie Batterieplatten, die den pulverförmigen Keimbildner (Variante 3) enthalten, in der gleichen Form für Einzelplattentests vorbereitet. In der nachfolgenden Tabelle 1 findet sich eine Detailübersicht der Zyklenprüfung im Rahmen der Vergleichsuntersuchung.

**Tabelle 1**

| Zelle | 5 Std. Kapazität | Anzahl Zyklen | Ah Durchsatz | Entlade-Entspannung |
|---|---|---|---|---|
| | | Zyklen in IUa Ladung (100% DoD-Zyklen) | | |
| TBLS+ 1%¹⁾ (Variante 2) | 2,5 Ah | 31 | 77,5 Ah | < 1,4 V |
| TBLS+ 1%¹⁾ (Variante 2) | 2,5 Ah | 33 | 82,5 Ah | < 1,4 V |
| RL+ 0,5% (Variante 1) | 2,5 Ah | 31 | 77,5 Ah | < 1,4 V |
| RL+ 0,5% (Variante 1) | 2,5 Ah | 34 | 85 Ah | < 1,4 V |
| 0,5% pulverf. Keimb. (Variante 3) | 2,5 Ah | 23 | 57,5 Ah | < 1,4 V |
| 0,5% pulverf. Keimb. (Variante 3) | 2,5 Ah | 24 | 60 Ah | < 1,4 V |

| | | | | |
|---|---|---|---|---|
| ¹⁾ äquivalent zu 0,5% 4-basischem Keimbildner | | | | |

### Zusammenfassung der elektrischen Testergebnisse

Die Einzelplatten, die RL+ oder den 4-basischen Keimbildner TBLS+ enthalten, zeigten ein deutlich besseres Erstladungsverhalten (Formationsverhalten) im Vergleich zu den Einzelplatten mit dem pulverförmigen Keimbildner. Alle Einzelplatten enthielten dieselbe Menge an 4-basischem Keimbildner.

Die Einzelplatten, die RL+ oder den 4-basischen Keimbildner TBLS+ enthielten, zeigten nahezu gleiches Zyklenverhalten.

Der erzielte Gesamtladungsumsatz (gemessen in Ah) ist ein Maß für die Leistungsfähigkeit im zyklischen Lade- und Entladebetrieb der positiven Aktivmasse. In diesen Testbedingungen zeigen die Einzelplatten, die das Produkt RL+ (Variante 1) oder den 4-basischen Keimbildner TBLS+ (Variante 2) enthielten, vergleichbare Ergebnisse und insbesondere höhere Zyklenzahlen als die Platten mit dem pulverförmigen 4-basischen Keimbildner (Variante 3)

### Zusammenfassende Übersicht

Aus der vorstehenden Beschreibung sowie im Lichte der dargestellten Beispiele ergibt sich für die vorliegende Erfindung, einbezogen deren Vorteile, folgende Kennzeichnung:
**1.** Das erfindungsgemäße beschichtete pulvrige Bleioxid ist ein stabiles, pulvriges Additiv-Material, auf dem ein 4-basisches Bleisulfat (4BS) in Form feiner Kristalle, insbesondere aus einer wässrigen TBLS+-Suspension, abgeschieden wird. Es wurde Mustermaterial vom RL+ als Masterbatch mit Gewichtsanteilen ("Beladungen") von 4-basischen Keimbildnern zwischen 2 Gew.-% und 9 Gew.-% erfolgreich hergestellt. Für Kundenversuche wurden diese Masterbatches mit nichtmodifizierter Bleimennige gleicher Spezifikation verdünnt, um die vom Kunden angefragten Dosierungen mit 4-basischen Keimbildnern zu erreichen. Analytisch ist das erfindungsgemäß beschichtete bzw. auf dem Bleioxid aufgebrachte 4-basische Bleisulfat, d.h. das "geträgerte" 4-basische Bleisulfat, bei Anteilen von über 1 Gew.-%, bezogen auf die Bleimennige (das bevorzugte Trägermaterial) mittels der IR-Schwingungsspektroskopie erfassbar. Ein Nachweis mittels Röntgenbeugung ist auch unter 1 Gew.-% möglich und wurde durchgeführt. Das geträgerte 4-basische Bleisulfat wurde mittels energiedispersiver Röntgenspektroskopie (EDX) als Signal für das Element Schwefel (S) sichtbar gemacht. Die Analytik ist aufgrund der Überlagerung der Spektrallinien des Bleis (Pb) und des Schwefels (S) anspruchsvoll. Durch das erfindungsgemäße Verfahren werden die 4-basischen Bleisulfatkristalle auf der Oberfläche der Mennige fein verteilt angelagert. Das Material ist stabil angebunden und die Wirkung des 4-basischen Bleisulfats bleibt dennoch erhalten.
**2.** Die vom TBLS+ bekannten Wirkungsweisen in der positiven Aktivmasse bei einer tetrabasischen Reifung der positiven Batterieplatte wurden am RL+ zum Vergleich erforscht. Es zeigten sich bei gleicher effektiver Dosierung des 4-basischen Bleisulfats dem TBLS+ in einigen Aspekten bessere Ergebnisse. Die Details werden nachfolgend erläutert. Hierbei wurden unter anderem die strukturellen Unterschiede aufgrund der Additive und die Wirkung im Hinblick auf elektrische Leistungsdaten der mit dem Additiv optimierten Platten untersucht.

### Vergleich von TBLS+ und RL+ (strukturelle Vorteile):

RL+ erlaubt es, die Größe der tetrabasischen Bleisulfatkristalle in gereiften Platten in vergleichbarer Weise zu beeinflussen wie TBLS+ (dies wurde durch vergleichende REM Untersuchungen bestätigt).

Die Porosität der gereiften Aktivmasse wird erhöht und RL+ erreicht hier eine vergleichbare Wirkung bei identischem 4-basischem Bleisulfatanteil im Pastengemisch (dies wurde durch vergleichende Hg-Porosimetrie-Messungen bestätigt).

Die Porenstruktur der gereiften Aktivmasse wird verbessert: Mikroporen <1 µm werden zu Gunsten von Makroporen >1 µm zurückgedrängt. Hier ist die Wirkung dem TBLS+ tendenziell überlegen.

In elektrischen Tests zeigt es sich, dass mittels RL+ die Kapazität erhöht werden kann, dies bei gleichem Einsatz von Aktivmasse in der Platte.

### Vergleich TBLS+ und RL+ (elektrische Prüfungen):

Es wurden spezielle Zyklenprüfungen mit hoher Entladetiefe ("Stresstests") im Vergleich durchgeführt. Es zeigte sich, dass die 4-basisch gereiften Platten mit TBLS+ und RL+ eine ähnlich hohe Zyklenfestigkeit aufweisen.

Hinweis zum Test: Die Zyklenprüfung erfolgte an einzelnen positiven Platten in Verschaltung mit zwei negativen Platten. Hierdurch ist ausschließlich die positive Aktivmasse begrenzend für die Kapazität der elektrochemischen Zelle. Folglich sind Leistungsunterschiede der Zelle in Bezug auf die Kapazität im Wesentlichen der positive Elektrode zuzuschreiben. Durch die hohe Entladungstiefe wird die Zyklenfestigkeit der positiven Platte und der hier vorliegenden Aktivmassestruktur geprüft.

Im Vergleich steigt die Zyklenfestigkeit durch RL+ und TBLS+ um mindestens 20 % gegenüber derjenigen von Referenzplatten ohne 4-basisches Bleisulfat als Keimbildnermaterial.

In diesem 4-basischen Screening wurde auch ein pulvriges 4-basisches Bleisulfat zum Vergleich geprüft. Dieses zeigte in den strukturellen Untersuchungen eine weniger geeignete Struktur. Die Ergebnisse des 4-basischen Screenings sind vorstehend dargestellt.

### 3. "Red Lead Plus" - (RL+) kombiniert die Vorteile von Bleimennige (RL) und TBLS+:

Die vorliegende Entwicklung der Erfindung RL+ geht unter anderem auf eine Anfrage nach einem einfach zu nutzenden und hocheffektiven Keimbildnermaterial für die 4-basische Reifung von Batterieplatten zurück. Eine stabile, hoch poröse positive Aktivmasse wird erzielt (vergleichbar zum Einsatz von TBLS+). Der Energiebedarf bei der Erstladung der Bleisäurebatterie wird reduziert (vergleichbar zum Einsatz von Bleimennige).

Die Konzentration von 4-basischem Keimbildner (4BS), die auf die Bleimennigepartikel aufgebracht wird, kann variiert werden. Die 4-basischen Keimbildner sind auf der Oberfläche der Bleimennige fest angekoppelt, dadurch liegt eine 4-basisch dotierte Bleimennige vor.

Schließlich soll hervorgehoben werden, dass Bleimennige im Rahmen der Erfindung ein besonders vorteilhaftes Beispiel als Bleioxid ist. Es ist ohne Weiteres erkennbar, dass dieses auch durch andere Bleioxide, wie Batterieoxid, ersetzt werden kann, insbesondere durch Bartonoxid.

### 4. Das erfindungsgemäße Produkt RL+ bietet gegenüber dem TBLS+ folgende vorteilhafte Eigenschaften, die zu einer verbesserten Leistungsfähigkeit der Blei-Säure-Batterie führen:

1. Positive Platten in Blei-Säure Batterien für Industrieanwendungen und für U-Boote werden oftmals in der Röhrchenplattentechnik gefertigt. Hierzu wird eine zylindrische Gewebetasche mit einem trockenen Batterieoxid durch Einrütteln des pulverförmigen Materials befüllt. Hierbei konnten bisher keine Keimbildner mit einer optimalen Verteilung in das Batterieoxid gemischt werden, um eine einheitliche elektrische Leistungsfähigkeit für jede Röhrchenplatte zu gewährleisten. Die Verwendung des RL+ gibt zum ersten Mal die Möglichkeit, dieses Problem zu lösen und von Platte zu Platte dieselben elektrischen Leistungsdaten zu erhalten.
2. Neben der Trockenfüllung von positiven Platten wird auch ein großer Teil dieser Platten mit einer nassen Paste durch Einspritzen der wässrigen Paste befüllt. Hierbei muss im Vergleich zu positiven Batteriepasten, die auf Bleigitter verstrichen werden, mit Pasten gearbeitet werden, die einen höheren Anteil an Wasser enthalten. Die Verwendung von RL+ verhindert in diesem Fall das Ausschlämmen eines Teils des 4-basischen Bleisulfats (Keimbildners) mit dem überschüssigen Wasser, welches durch die Poren der Gewebetasche austritt. Mit dem RL+ ist es möglich, die angestrebte Porengröße der positiven Aktivmasse ohne einen Überschuss an 4-basischem Keimbildner zu erzielen.
3. Durch den Auftrag des 4-basischen Bleisulfats (Keimbildner) auf die Oberfläche der Bleimennigepartikel können geringere Konzentrationen von Keimbildnern eingesetzt und homogen in der Pastenmischung verteilt werden, ohne dass hierfür Hochleistungsmischer zum Einsatz kommen müssen. Bei den konzentrierten 4-basischen Keimbildnern (Variante 1 und 3) besteht bei der Verwendung der in diesem Industriesegment üblichen Mischertechnologie ein hohes Risiko, inhomogene Pasten zu erzeugen, die später zu uneinheitlichen Leistungsdaten der Batterien führen. Weiterhin können 4-basische Keimbildnerkonzentrationen unter 0,5 Gew.-% nicht homogen in der Batteriepaste verteilt werden. Hier bietet RL+ deutliche Vorteile.

## Patentansprüche

1. Beschichtetes pulvriges Bleioxid, insbesondere in Form von Bleimennige und/oder von Batterieoxid, **dadurch gekennzeichnet, dass** auf der Oberfläche des beschichteten pulvrigen Bleioxids 4-basisches Bleisulfat einer mittleren Teilchengröße von weniger als etwa 3 µm haftet und der Wassergehalt des beschichteten pulvrigen Bleioxids unter 3,5 Gew.-%, insbesondere unter 3,0 Gew.-%, liegt.

2. Beschichtetes pulvriges Bleioxid nach Anspruch 1, **dadurch gekennzeichnet, dass** der Wassergehalt 1 Gew.-% bis 2,7 Gew.-%, insbesondere 1,3 Gew.-% bis 2,2 Gew.-%, beträgt.

3. Beschichtetes pulvriges Bleioxid nach einem der vorhergehenden Ansprüche, **dadurch gekennzeichnet, dass** die mittlere Teilchengröße des 4-basischen Bleisulfats kleiner als etwa 1,5 µm ist und insbesondere zwischen etwa 0,2 µm und 0,9 µm liegt.

4. Beschichtetes pulvriges Bleioxid nach mindestens einem der vorhergehenden Ansprüche, **dadurch gekennzeichnet, dass** es eine mittlere Teilchengröße von etwa 1 µm bis 8 µm, insbesondere von etwa 3 µm bis 6 µm, aufweist.

5. Beschichtetes pulvriges Bleioxid nach mindestens einem der vorhergehenden Ansprüche, **dadurch gekennzeichnet, dass** es eine Rieselfähigkeit/Fließfähigkeit, gemessen als Schüttwinkel nach DIN ISO 4324/Dezember 1983 von 38° bis 43°, insbesondere von 39° bis 42°, aufweist.

6. Beschichtetes pulvriges Bleioxid nach mindestens einem der vorhergehenden Ansprüche, **dadurch gekennzeichnet, dass** sich unter Anwendung eines Stampfvolumeters (STAV II) ein Wert der Stampfdichte von 3,2 g/ml bis 3,4 g/ml bei Verwendung von 2000 Hüben ergibt.

7. Beschichtetes pulvriges Bleioxid nach mindestens einem der vorhergehenden Ansprüche, **dadurch gekennzeichnet, dass** es eine Schüttdichte von 1,5 g/ml bis 2,2 g/ml, insbesondere von 1,7 g/ml bis 1,9 g/ml, aufweist.

8. Beschichtetes pulvriges Bleioxid nach mindestens einem der vorhergehenden Ansprüche, **dadurch gekennzeichnet, dass** es sich durch eine Stabilität auszeichnet, wonach sich bei Transport und/oder bei Rütteln in trocken gefüllten Röhrchenplatten keine Entmischung einstellt.

9. Beschichtetes pulvriges Bleioxid nach mindestens einem der vorhergehenden Ansprüche, **dadurch gekennzeichnet, dass** das Bleioxid als Bleimennige und/oder als Batterieoxid in Form von Bartonoxid vorliegt, wobei das Bartonoxid vorzugsweise einen Bleianteil von 15 Gew.-% bis 35 Gew.-%, insbesondere von 20 Gew.-% bis 25 Gew.-%, aufweist.

10. Beschichtetes pulvriges Bleioxid nach mindestens einem der vorhergehenden Ansprüche, **dadurch gekennzeichnet, dass** auf dessen Oberfläche zusätzlich zum 4-basischen Bleisulfat feinteilige Kieselsäure einer mittleren Teilchengröße von etwa 10 nm bis 120 nm, insbesondere von etwa 20 nm bis 80 nm, vorliegt.

11. Beschichtetes pulvriges Bleioxid nach Anspruch 10, **dadurch gekennzeichnet, dass** die feinteilige Kieselsäure hydrophob und/oder hydrophil, insbesondere pyrogen ist.

12. Beschichtetes pulvriges Bleioxid nach Anspruch 10 oder 11, **dadurch gekennzeichnet, dass** die Menge der feinteiligen Kieselsäure, bezogen auf das Gesamtgewicht aus 4-basischem Bleisulfat und feinteiliger Kieselsäure, etwa 0,01 Gew.-% bis 10 Gew.-%, insbesondere etwa 0,02 Gew.-% bis 5 Gew.-%, besonders bevorzugt etwa 0,05 Gew.-% bis 5 Gew.-%, beträgt.

13. Beschichtetes pulvriges Bleioxid nach mindestens einem der vorhergehenden Ansprüche, **dadurch gekennzeichnet, dass** die pulvrige Bleimennige eine mittlere Teilchengröße von 2 µm bis 10 µm, insbesondere von 3 µm bis 8 µm, das pulvrige Batterieoxid eine mittlere Teilchengröße von 4 µm bis 15 µm, insbesondere von 5 µm bis 10 µm, das 4-basische Bleisulfat eine mittlere Teilchengröße von weniger als 3 µm, insbesondere weniger als 1,5 µm, insbesondere zwischen etwa 0,2 µm bis 0,9 µm, und/oder die feinteilige Kieselsäure eine mittlere Teilchengröße von etwa 10 nm bis 120 nm, insbesondere von etwa 20 nm bis 80 nm, aufweist.

14. Beschichtetes pulvriges Bleioxid nach mindestens einem der vorhergehenden Ansprüche, **dadurch gekennzeichnet, dass** auf 100 Gewichtsteile pulvrige Bleimennige und/oder pulvriges Bleioxid etwa 2 bis 20 Gewichtsteile, insbesondere etwa 5 bis 10 Gewichtsteile Beschichtungsmasse in Form von 4-basischem Bleisulfat, insbesondere unter Einbezug feinteiliger Kieselsäure, entfallen.

15. Verfahren zur Herstellung eines beschichteten pulvrigen Bleioxids nach mindestens einem der vorhergehenden Ansprüche, **dadurch gekennzeichnet, dass** pulvrige Bleimennige und/oder pulvriges Batterieoxid, insbesondere Bartonoxid, sowie eine wässrige Suspension einer hierfür vorgesehenen Beschichtungsmasse, die auf pulvrigem 4-basischem Bleisulfat und feinteiliger Kieselsäure beruht, unter Einwirkung hoher Scherkräfte innig gemischt werden, was zu einer Temperaturerhöhung führt, wobei die erhöhte Temperatur bis zu etwa 80 °C, vorzugsweise bis zu etwa 90 °C und insbesondere bis zu etwa 100 °C beträgt, und während des Mischens der Wasseranteil im anfallenden beschichteten pulvrigen Bleioxid, insbesondere durch Anlegen von Vakuum, auf weniger als 3,5 Gew.-%, insbesondere weniger als 3 Gew.-%, eingestellt wird.

16. Verfahren nach Anspruch 15, **dadurch gekennzeichnet, dass** der Wassergehalt 1 Gew.-% bis 2 Gew.-%, insbesondere 1,3 Gew.-% bis 1,8 Gew.-%, beträgt.

17. Verfahren nach Anspruch 15 oder bis 16, **dadurch gekennzeichnet, dass** bei der Temperaturerhöhung eine Temperatur von mindestens etwa 60 °C, insbesondere etwa 70 °C, überschritten wird.

18. Verfahren nach mindestens einem der Ansprüche 15 bis 17, **dadurch gekennzeichnet, dass** auf 100 g pulvrige Bleimennige und/oder pulvriges Batterieoxid etwa 2 bis 20 Gewichtsteile, insbesondere etwa 5 bis 10 Gewichtsteile, Beschichtungsmasse aus pulvrigem 4-basischem Bleisulfat und pulvriger Kieselsäure entfallen, wobei eine wässrige Suspension zum Beschichten herangezogen wird, die etwa 20 Gew.-% bis 60 Gew.-%, insbesondere 40 Gew.-% bis 50 Gew.-% der Beschichtungsmasse enthält.

19. Verfahren nach Anspruch 18, **dadurch gekennzeichnet, dass** die Beschichtungsmasse, die auf 4-basischem Bleisulfat und feinteiliger Kieselsäure beruht, etwa 0,01 Gew.-% bis 10 Gew.-%, insbesondere etwa 0,02 Gew.-% bis 5 Gew.-%, Kieselsäure enthält.

20. Verfahren nach mindestens einem der Ansprüche 15 bis 19, **dadurch gekennzeichnet, dass** der Energieeintrag durch Scherkräfte von 350 kJ bis 480 kJ, vorzugsweise von 400 kJ bis 430 kJ, insbesondere von 410 kJ bis 420 kJ, pro kg Substrat, beträgt.

21. Verfahren nach mindestens einem der Ansprüche 15 bis 20, **dadurch gekennzeichnet, dass** die pulvrige Bleimennige eine mittlere Teilchengröße von 2 µm bis 10 µm, insbesondere von 3 µm bis 8 µm, das pulvrige Batterieoxid eine mittlere Teilchengröße von 4 µm bis 15 µm, insbesondere von 5 µm bis 10 µm, das 4-basische Bleisulfat eine mittlere Teilchengröße von weniger als 3 µm, insbesondere weniger als 1,5 µm, insbesondere zwischen etwa 0,2 µm bis 0,9 µm, und/oder die feinteilige Kieselsäure eine mittlere Teilchengröße von etwa 10 nm bis 120 nm, insbesondere von etwa 20 nm bis 80 nm, aufweist.

22. Verfahren nach mindestens einem der Ansprüche 15 bis 21, **dadurch gekennzeichnet, dass** das angelegte Vakuum etwa 400 mbar bis 900 mbar, insbesondere etwa 600 mbar bis 700 mbar, beträgt.

23. Verwendung des beschichteten pulvrigen Bleioxids nach mindestens einem der vorhergehenden Ansprüche 1 bis 14 zur Herstellung positiver aktiver Pasten für Bleiakkumulatoren auf der Grundlage des auf Bleimennige beruhenden beschichteten pulvrigen Bleioxids sowie zur Herstellung positiver sowie negativer aktiver Pasten für Bleiakkumulatoren auf der Grundlage des auf Batterieoxid, insbesondere Bartonoxid, beruhenden beschichteten pulvrigen Bleioxids.

24. Verwendung nach Anspruch 23, **dadurch gekennzeichnet, dass** das beschichtete pulvrige Bleioxid sowohl im Rahmen einer Nass- als auch einer Trockenfüllung von Röhrchentaschen von Bleiakkumulatoren eingesetzt wird, aber auch für andere Batterieaktivmassen, die insbesondere auf Bleigittern oder anderen flachen Stromabnehmern verstrichen werden.

## Claims

1. A coated powdered lead oxide, in particular in the form of red lead and/or of battery oxide, **characterised in that** 4-basic lead sulphate of an average particle size of less than about 3 µm adheres to the surface of the coated powdered lead oxide and the water content of the coated powdered lead oxide is below 3.5 wt.%, in particular below 3.0 wt.%.

2. The coated powdered lead oxide according to claim 1, **characterised in that** the water content is 1 wt.% to 2.7 wt.%, in particular 1.3 wt.% to 2.2 wt.%.

3. The coated powdered lead oxide according to any one of the preceding claims, **characterised in that** the average particle size of the 4-basic lead sulphate is smaller than about 1.5 µm and in particular is between about 0.2 µm and 0.9 µm.

4. The coated powdered lead oxide according to at least one of the preceding claims, **characterised in that** it has an average particle size of about 1 µm to 8 µm, in particular of about 3 µm to 6 µm.

5. The coated powdered lead oxide according to at least one of the preceding claims, **characterised in that** it has a pourability/flowability, measured as an angle of repose according to DIN ISO 4324/December 1983, of 38° to 43°, in particular of 39° to 42°.

6. The coated powdered lead oxide according to at least one of the preceding claims, **characterised in that** a value of the tapped density of 3.2 g/ml to 3.4 g/ml is obtained using a tamping volumeter (STAV II) when using 2000 strokes.

7. The coated powdered lead oxide according to at least one of the preceding claims, **characterised in that** it has a bulk density of from 1.5 g/ml to 2.2 g/ml, in particular from 1.7 g/ml to 1.9 g/ml.

8. The coated powdered lead oxide according to at least one of the preceding claims, **characterised in that** it is **characterised by** a stability according to which no segregation occurs by transport and/or by jolting in dry filled tubular plates.

9. The coated powdered lead oxide according to at least one of the preceding claims, **characterised in that** the lead oxide is present as red lead and/or as battery oxide in the form of Barton oxide, the Barton oxide preferably having a lead content of from 15 wt.% to 35 wt.%, in particular from 20 wt.% to 25 wt.%.

10. The coated powdered lead oxide according to at least one of the preceding claims, **characterised in that**, in addition to the 4-basic lead sulphate, finely divided silicic acid of an average particle size of about 10 nm to 120 nm, in particular of about 20 nm to 80 nm, is present on its surface.

11. The coated powdered lead oxide according to claim 10, **characterised in that** the finely divided silicic acid is hydrophobic and/or hydrophilic, in particular pyrogenic.

12. The coated powdered lead oxide according to claim 10 or 11, **characterised in that** the amount of finely divided silicic acid, based on the total weight of 4-basic lead sulphate and finely divided silicic acid, is about 0.01 wt.% to 10 wt.%, in particular about 0.02 wt.% to 5 wt.%, particularly preferably about 0.05 wt.% to 5 wt.%.

13. The coated powdered lead oxide according to at least one of the preceding claims, **characterised in that** the powdered red lead has an average particle size of from 2 µm to 10 µm, in particular from 3 µm to 8 µm, the powdered battery oxide has an average particle size of from 4 µm to 15 µm, in particular from 5 µm to 10 µm, the 4-basic lead sulphate has an average particle size of less than 3 µm, in particular less than 1.5 µm, in particular between about 0.2 µm to 0.9 µm, and/or the finely divided silicic acid has an average particle size of from about 10 nm to 120 nm, in particular from about 20 nm to 80 nm.

14. The coated powdered lead oxide according to at least one of the preceding claims, **characterised in that** for every 100 parts by weight of powdered red lead and/or powdered lead oxide there are about 2 to 20 parts by weight, in particular about 5 to 10 parts by weight, of coating mass in the form of 4-basic lead sulphate, in particular including finely divided silicic acid.

15. A process for the preparation of a coated powdered lead oxide according to at least one of the preceding claims, **characterised in that** powdered red lead and/or powdered battery oxide, in particular Barton oxide, and an aqueous suspension of a coating mass provided for this purpose, which is based on powdered 4-basic lead sulphate and finely divided silicic acid, are intimately mixed under the action of high shear forces, which leads to an increase in temperature, the increased temperature being up to about 80°C, preferably up to about 90°C and in particular up to about 100°C, and during the mixing the water content in the resulting coated powdered lead oxide is adjusted, in particular by applying a vacuum, to less than 3.5 wt.%, in particular less than 3 wt.%.

16. The process according to claim 15, **characterised in that** the water content is 1 wt.% to 2 wt.%, in particular 1.3 wt.% to 1.8 wt.%.

17. The process according to claim 15 or to 16, **characterised in that** a temperature of at least about 60 °C, in particular about 70 °C, is exceeded during the temperature increase.

18. The process according to at least one of claims 15 to 17, **characterised in that** for every 100 g of powdered red lead and/or powdered battery oxide, there are about 2 to 20 parts by weight, in particular about 5 to 10 parts by weight, of coating mass of powdered 4-basic lead sulphate and powdered silicic acid, wherein an aqueous suspension is used for coating which contains about 20 wt.% to 60 wt.%, in particular 40 wt.% to 50 wt.%, of the coating mass.

19. The process according to claim 18, **characterised in that** the coating mass based on 4-basic lead sulphate and finely divided silicic acid contains about 0.01 wt.% to 10 wt.%, in particular about 0.02 wt.% to 5 wt.%, of silicic acid.

20. The process according to at least one of claims 15 to 19, **characterised in that** the energy input by shear forces is from 350 kJ to 480 kJ, preferably from 400 kJ to 430 kJ, in particular from 410 kJ to 420 kJ, per kg of substrate.

21. The process according to at least one of claims 15 to 20, **characterised in that** the powdered red lead has an average particle size of from 2 µm to 10 µm, in particular from 3 µm to 8 µm, the powdered battery oxide has an average particle size of from 4 µm to 15 µm, in particular from 5 µm to 10 µm, the 4-basic lead sulphate has an average particle size of less than 3 µm, in particular less than 1.5 µm, in particular between about 0.2 µm to 0.9 µm, and/or the finely divided silicic acid has an average particle size of from about 10 nm to 120 nm, in particular from about 20 nm to 80 nm.

22. The process according to at least one of claims 15 to 21, **characterised in that** the vacuum applied is about 400 mbar to 900 mbar, in particular about 600 mbar to 700 mbar.

23. Use of the coated powdered lead oxide according to at least one of the preceding claims 1 to 14 for the preparation of positive active pastes for lead-acid batteries based on the coated powdered lead oxide based on red lead, and for the preparation of positive as well as negative active pastes for lead-acid batteries based on the coated powdered lead oxide based on battery oxide, in particular Barton oxide.

24. The use according to claim 23, **characterised in that** the coated powdered lead oxide is used both in the context of a wet and a dry filling of tubular pockets of lead-acid batteries, but also for other battery active masses which are spread in particular on lead grids or other flat current collectors.

## Revendications

1. Oxyde de plomb pulvérulent enrobé, en particulier sous la forme de minium et/ou d'oxyde de batterie, **caractérisé en ce que** du sulfate de plomb tétrabasique d'une taille moyenne de particules inférieure à environ 3 µm adhère à la surface de l'oxyde de plomb pulvérulent enrobé et la teneur en eau de l'oxyde de plomb pulvérulent enrobé est inférieure à 3,5 % en poids, en particulier inférieure à 3,0 % en poids.

2. Oxyde de plomb pulvérulent enrobé selon la revendication 1, **caractérisé en ce que** la teneur en eau va de 1 % en poids à 2,7 % en poids, en particulier de 1,3 % en poids à 2,2 % en poids.

3. Oxyde de plomb pulvérulent enrobé selon l'une quelconque des revendications précédentes, **caractérisé en ce que** la taille moyenne de particules du sulfate de plomb tétrabasique est inférieure à environ 1,5 µm et en particulier se situe entre environ 0,2 µm et 0,9 µm.

4. Oxyde de plomb pulvérulent enrobé selon au moins l'une quelconque des revendications précédentes, **caractérisé en ce qu'**il présente une taille moyenne de particules d'environ 1 µm à 8 µm, en particulier va d'environ 3 µm à 6 µm.

5. Oxyde de plomb pulvérulent enrobé selon au moins l'une quelconque des revendications précédentes, **caractérisé en ce qu'**il présente une faculté de ruissellement/d'écoulement, mesurée selon l'angle du talus d'éboulement selon la norme DIN ISO 4324 (décembre 1983) de 38° à 43°, en particulier de 39° à 42°.

6. Oxyde de plomb pulvérulent enrobé selon au moins l'une quelconque des revendications précédentes, **caractérisé en ce qu'**il résulte, en mettant en œuvre un volumètre de tassement (STAV II), une valeur de masse volumique tassée de 3,2 g/ml à 3,4 g/ml lors de l'utilisation de 2000 courses.

7. Oxyde de plomb pulvérulent enrobé selon au moins l'une quelconque des revendications précédentes, **caractérisé en ce qu'**il présente une valeur de masse volumique de 1,5 g/ml à 2,2 g/ml, en particulier de 1,7 g/ml à 1,9 g/ml.

8. Oxyde de plomb pulvérulent enrobé selon au moins l'une quelconque des revendications précédentes, **caractérisé en ce qu'**il se distingue par une stabilité, selon laquelle aucune ségrégation n'a lieu lors du transport et/ou lors de l'agitation dans des plaques à tubes remplies à sec.

9. Oxyde de plomb pulvérulent enrobé selon au moins l'une quelconque des revendications précédentes, **caractérisé en ce que** l'oxyde de plomb est présent en tant que minium et/ou en tant qu'oxyde de batterie sous la forme d'oxyde de Barton, dans lequel l'oxyde de Barton présente de préférence une proportion de plomb de 15 % à poids à 35 % en poids, en particulier de 20 % en poids à 25 % en poids.

10. Oxyde de plomb pulvérulent enrobé selon au moins l'une quelconque des revendications précédentes, **caractérisé en ce que** sont présentes, sur sa surface, en plus du sulfate de plomb tétrabasique, de fines particules de silice d'une taille moyenne de particules d'environ 10 nm à 120 nm, en particulier d'environ 20 nm à 80 nm.

11. Oxyde de plomb pulvérulent enrobé selon la revendication 10, **caractérisé en ce que** les fines particules de silice sont hydrophobes et/ou hydrophiles, en particulier sont pyrogènes.

12. Oxyde de plomb pulvérulent enrobé selon la revendication 10 ou 11, **caractérisé en ce que** la quantité des fines particules de silice, rapportée au poids total de sulfate de plomb tétrabasique et de fines particules de silice, va d'environ 0,01 % en poids à 10 % en poids, en particulier d'environ 0,02 % en poids à 5 % en poids, de manière particulièrement préférée d'environ 0,05 % en poids à 5 % en poids.

13. Oxyde de plomb pulvérulent enrobé selon au moins l'une quelconque des revendications précédentes, **caractérisé en ce que** le minium pulvérulent présente une taille moyenne de particules de 2 µm à 10 µm, en particulier de 3 µm à 8 µm, l'oxyde de batterie pulvérulent présente une taille moyenne de particules de 4 µm à 15 µm, en particulier de 5 µm à 10 µm, le sulfate de plomb tétrabasique présente une taille moyenne de particules inférieure à 3 µm, en particulier inférieure à 1,5 µm, en particulier entre environ 0,2 µm à 0,9 µm, et/ou les fines particules de silice présentent une taille moyenne de particules d'environ 10 nm à 120 nm, en particulier d'environ 20 nm à 80 nm.

14. Oxyde de plomb pulvérulent enrobé selon au moins l'une quelconque des revendications précédentes, **caractérisé en ce que** sur 100 parties en poids, environ 2 à 20 parties en poids sont représentées par du minium pulvérulent et/ou de l'oxyde de plomb pulvérulent, en particulier environ 5 à 10 parties en poids sont une masse d'enrobage sous la forme de sulfate de plomb tétrabasique, en particulier en intégrant de fines particules de silice.

15. Procédé de fabrication d'un oxyde de plomb pulvérulent enrobé selon au moins l'une quelconque des revendications précédentes, **caractérisé en ce que** du minium pulvérulent et/ou de l'oxyde de batterie pulvérulent, en particulier de l'oxyde de Barton, ainsi qu'une suspension aqueuse d'une masse d'enrobage prévue à cet effet, qui se base sur du sulfate de plomb tétrabasique pulvérulent et de fines particules de silice, sont intimement mélangés sous l'effet d'importantes forces de cisaillement, ce qui provoque une élévation de température, dans lequel la température élevée va jusqu'à environ 80 °C, de préférence jusqu'à environ 90 °C et en particulier jusqu'à environ 100 °C, et au cours du mélange, la proportion d'eau dans l'oxyde de plomb pulvérulent enrobé résultant est réglée, en particulier par application de vide, sur une valeur inférieure à 3,5 % en poids, en particulier inférieure à 3 % en poids.

16. Procédé selon la revendication 15, **caractérisé en ce que** la teneur en eau va de 1 % en poids à 2 % en poids, en particulier de 1,3 % en poids à 1,8 % en poids.

17. Procédé selon la revendication 15 ou 16, **caractérisé en ce que** lors de l'élévation de température, une température d'au moins environ 60 °C, en particulier d'environ 70 °C, est dépassée.

18. Procédé selon au moins l'une quelconque des revendications 15 à 17, **caractérisé en ce que** sur 100 g de minium pulvérulent et/ou d'oxyde de batterie pulvérulent, environ 2 à 20 parties de poids, en particulier environ 5 à 10 parties de poids, sont une masse d'enrobage composée de sulfate de plomb tétrabasique pulvérulent et de silice pulvérulente, dans lequel est prise en compte pour l'enrobage une suspension aqueuse, qui contient environ 20 % en poids à 60 % en poids, en particulier 40 % en poids à 50 % en poids, de la masse d'enrobage.

19. Procédé selon la revendication 18, **caractérisé en ce que** la masse d'enrobage, qui se base sur du sulfate de plomb tétrabasique et de fines particules de silice, contient environ 0,01 % en poids à 10 % en poids, en particulier environ 0,02 % en poids à 5 % en poids de silice.

20. Procédé selon au moins l'une quelconque des revendications 15 à 19, **caractérisé en ce que** l'apport en énergie par des forces de cisaillement va de 350 kJ à 480 kJ, de préférence de 400 kJ à 430 kJ, en particulier de 410 kJ à 420 kJ, par kg de substrat.

21. Procédé selon au moins l'une quelconque des revendications 15 à 20, **caractérisé en ce que** le minium pulvérulent présente une taille moyenne de particules de 2 µm à 10 µm, en particulier de 3 µm à 8 µm, l'oxyde de batterie pulvérulent présente une taille moyenne de particules de 4 µm à 15 µm, en particulier de 5 µm à 10 µm, le sulfate de plomb tétrabasique présente une taille moyenne de particules inférieure à 3 µm, en particulier inférieure à 1,5 µm, en particulier entre environ 0,2 µm à 0,9 µm, et/ou les fines particules de silice présentent une taille moyenne de particules d'environ 10 nm à 120 nm, en particulier d'environ 20 nm à 80 nm.

22. Procédé selon au moins l'une quelconque des revendications 15 à 21, **caractérisé en ce que** le vide appliqué est d'environ 400 mbar à 900 mbar, en particulier d'environ 600 mbar à 700 mbar.

23. Utilisation de l'oxyde de plomb pulvérulent enrobé selon au moins l'une quelconque des revendications 1 à 14 pour fabriquer des pâtes actives positives pour des accumulateurs au plomb sur la base de l'oxyde de plomb pulvérulent enrobé à base de minium ainsi que pour fabriquer des pâtes actives aussi bien positives que négatives pour des accumulateurs au plomb sur la base de l'oxyde de plomb pulvérulent enrobé se basant sur de l'oxyde de batterie, en particulier de l'oxyde de Barton.

24. Utilisation selon la revendication 23, **caractérisé en ce que** l'oxyde de plomb pulvérulent enrobé est employé à la fois dans le cadre d'un remplissage par voie humide et à sec de compartiments à tubes d'accumulateurs au plomb, tout comme pour d'autres masses actives de batterie, qui sont étalées en particulier sur des grilles en plomb ou d'autres collecteurs de courant plats.
